Europäisches Patentamt

European Patent Office

Office européen des brevets

(11) Numéro de publication: **0 007 584**

**A1**

# DEMANDE DE BREVET EUROPEEN

(21) Numéro de dépôt: **79102549.7**

(22) Date de dépôt: **19.07.79**

(51) Int. Cl.³: **H 02 G 15/06**

(30) Priorité: **19.07.78 FR 7821427**
**09.11.78 FR 7831686**

(43) Date de publication de la demande:
**06.02.80 Bulletin 80/3**

(84) Etats Contractants Désignés:
**AT BE CH DE FR GB IT LU NL SE**

(71) Demandeur: **Société Anonyme dite Mars-Actel**
**148, Boulevard Haussmann**
**F-75008 Paris(FR)**

(72) Inventeur: **Crepel, Denis**
**58 Route d'Illy**
**Floing F-08200 Sedan(FR)**

(74) Mandataire: **Weinmiller, Jürgen et al,**
**Zeppelinstrasse 63**
**D-8000 München 80(DE)**

(54) **Extrémité de câble électrique.**

(57) Protection d'une extrémité de câble électrique en vue
d'éliminer le risque de formation d'effluves. L'extrémité de
câble comporte une âme conductrice (1), une couche isolante
(2), un blindage extérieur, un manchon isolant (9) destiné à
être enfilé sur le câble, le manchon isolant (9) étant en matière
extensible et comportant à l'intérieur une matière (18) assurant une répartition linéaire de tension.

FIG.1A    FIG.1B

EP 0 007 584 A1

## Extrémité de câble électrique

L'invention concerne la protection des extrémités de câbles électriques moyenne tension, en vue d'assurer une bonne exploitation en éliminant le risque de formation d'effluves grâce à une répartition linéaire du champ électrique le long de l'isolant du câble.

Les câbles électriques moyenne tension comprennent généralement une âme conductrice, une couche isolante, une couche semi-conductrice, un écran équipotentiel que l'on arrête à une certaine distance de l'extrémité du câble et une gaine isolante extérieure de protection. Afin d'éviter la formation d'effluves aux extrémités de câbles, entre l'arrêt d'écran et l'extrémité de l'âme conductrice, il importe d'uniformiser le champ électrique.

Les moyens habituellement utilisés sont constitués soit par un déflecteur de champ métallique monté sur support isolant par rubanage ou par moulage, soit par un tube thermo-rétractable à l'intérieur duquel on dépose une matière qui réalise une répartition linéaire de tension.

Ces moyens nécessitent une main d'oeuvre importante et ne sont adaptés qu'à une section de câble déterminée ; le dernier moyen nécessite un chauffage pour la mise en place, ce qui risque de brûler le câble et laisse un dépôt à la surface du câble.

Le but de l'invention est de pallier ces inconvénients en réalisant un dispositif de protection pour extrémité de câble, adaptable à une grande gamme de sections de câble, jouant le rôle de répartiteur linéaire de tension et pouvant être mis en place sans chauffage, par simple enfilage sur le câble.

La présente invention a pour objet une extrémité de câble comportant une âme conductrice, une couche isolante, un blindage extérieur enlevé à une certaine distance à partir de l'extrémité du câble, caractérisée en ce que, pour éliminer les contraintes électriques à l'extrémité du câble, elle comporte un manchon isolant en matière extensible destiné à être enfilé sur le câble et comportant à l'intérieur une matière assurant une répartition linéaire de tension.

Le manchon peut comporter au moins une ailette augmentant la distance de contournement.

Le manchon est en matière suffisamment souple et élastique pour permettre son adaptation sur un grand nombre de diamètres de gaine de câble.

Le profil de l'ailette est tel qu'elle se trouve en dehors de la partie cylindrique extensible du manchon de façon à ne pas nuire à l'extensibilité du manchon.

Les caractéristiques et avantages de l'invention apparaîtront bien des revendications et de la description ci-après d'exemples de mise en oeuvre de l'invention donnés en référence aux figures du dessin annexé.

La figure 1 représente une extrémité de câble pourvue de manchons selon l'invention ; la figure 1 en raison de ses dimensions a été partagée en deux parties 1A et 1B.

La figure 2 représente un manchon sans ailette.

La figure 3 représente un manchon avec ailette avec son tube et son bouchon de livraison.

La figure 4 représente la mise en place du manchon à ailettes sur l'extrémité de câble.

Les figures 5 et 6 donnent une vue en bout et une coupe longitudinale d'un manchon pourvu de canaux intérieurs.

La figure 7 représente une extrémité de câble pourvue d'une variante de manchons.

La figure 8 est une coupe de la figure 7 suivant la ligne II-II,

La figure 9 donne le détail au point III de la figure 7

La figure 10 donne le détail au point IV de la figure 7

La figure 11 représente une extrémité de câble pourvue de manchons suivant les figures 12 et 13.

La figure 12 représente en vue extérieure un manchon isolant à trois ailettes.

- 3 -

La figure 13 représente en vue extérieure une variante de manchon isolant à trois ailettes du type sans matière à répartition linéaire de tension.

La figure 14 représente une variante d'extrémité de câble pourvue de manchons isolants sans ailettes.

La figure 15A représente les détails A et C de la figure 11.

La figure 15B représente le détail B de la figure 11.

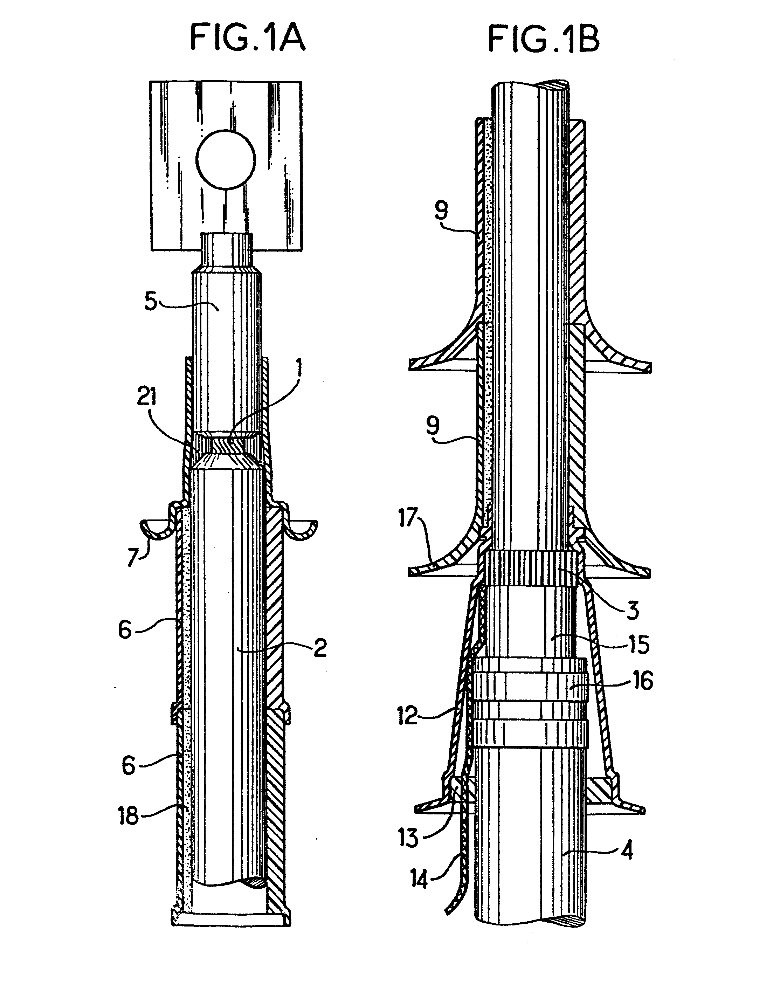

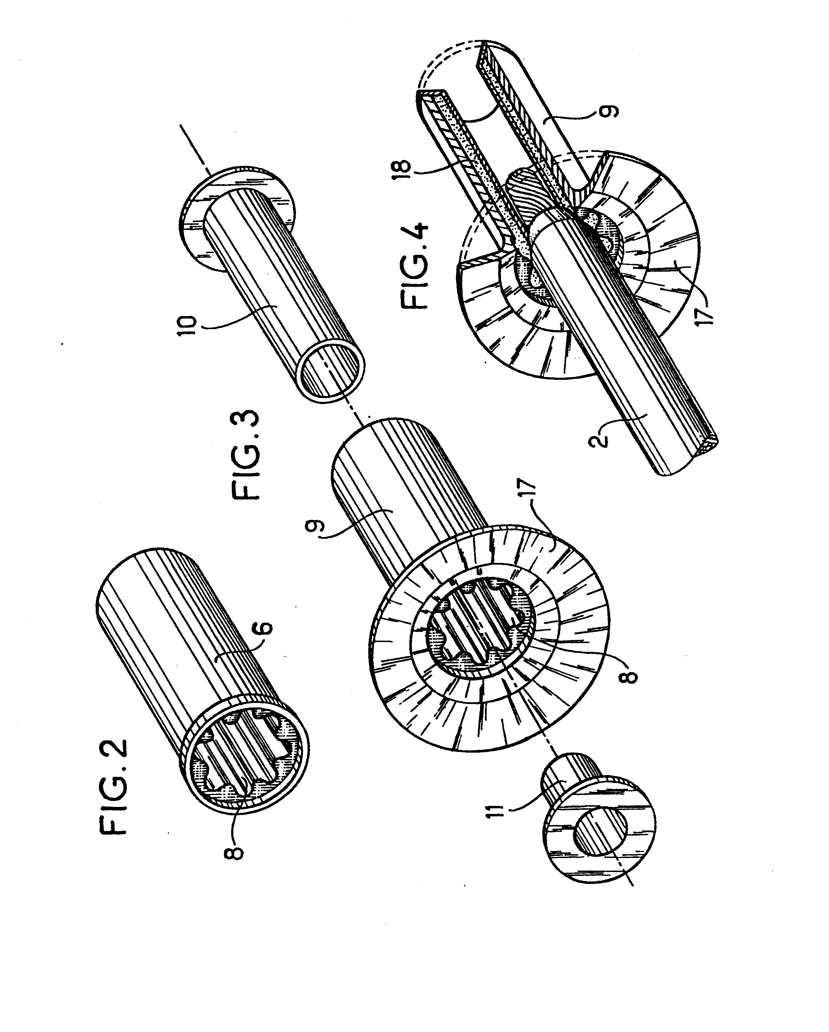

Tel que représenté sur la figure 1, le câble comporte une âme conductrice à plusieurs brins ou non 1, une couche semi-conductrice non apparente sur la figure, un isolant 2, une couche semi-conductrice cannelée 3, un écran métallique collé à la gaine extérieure non apparent sur la figure, une gaine isolante de protection 4, une cosse 5 fixée sur l'extrémité de l'âme 1 du câble, un manchon semi-conducteur 7 assurant l'étanchéité entre l'isolant du câble et la cosse avec interposiion d'un ruban semi-conducteur 21. Le manchon 7 comporte un anneau pour détourner les lignes de fuites. Le manchon 7 est suivi d'un manchon 6 (voir figure 2) en matière isolante muni de cannelures internes 8. Le manchon 6 est suivi d'un manchon 9 également en matière isolante et pourvu de cannelures internes 8. Le manchon 9 pour son transport est monté sur un tube 10 et fermé à son autre extrémité par un bouchon 11 (voir figure 3).

Le manchon 9 est suivi d'un deuxième manchon 9 lequel est suivi d'un manchon conique 12 en matière semi-conductrice muni d'une bague d'étanchéité 13 jouant le rôle de sortie d'écran étanche au niveau de la tresse 14 soudée sur une plaque métallique de sortie d'écran 15 ; la gaine isolante 4 des câbles est maintenue serrée par des colliers 16.

La figure 2 montre un manchon 6 cylindrique muni de cannelures intérieures longitudinales 8.

La figure 3 montre la forme d'un manchon 9 à ailette 17 ; sur la vue en coupe de la figure 1B on voit que l'ailette a une forme évasée à la base en dehors de la partie cylindrique

- 4 -

extensible du manchon de manière à ne pas nuire à l'extensibilité de la partie cylindrique et à faciliter la mise en place du manchon sur le câble.

La figure 4 montre la mise en place d'un manchon 9 à aillette sur l'isolant du câble. Le bouchon 11 est enlevé, les cannelures 8 étant remplies de matière à répartition linéaire de tension, l'ailette montée sur son tube 10 est poussée sur le chanfrein du câble ; en butant sur ce chanfrein le tube 10 est chassé et l'ailette glisse sur le câble ; il suffit de tourner l'ailette en la poussant pour l'amener en bonne position ; la matière contenue dans les cannelures 8 du type à répartition linéaire de tension permet le glissement de l'ailette sur le câble et chasse l'air entre l'ailette et l'isolant du câble.

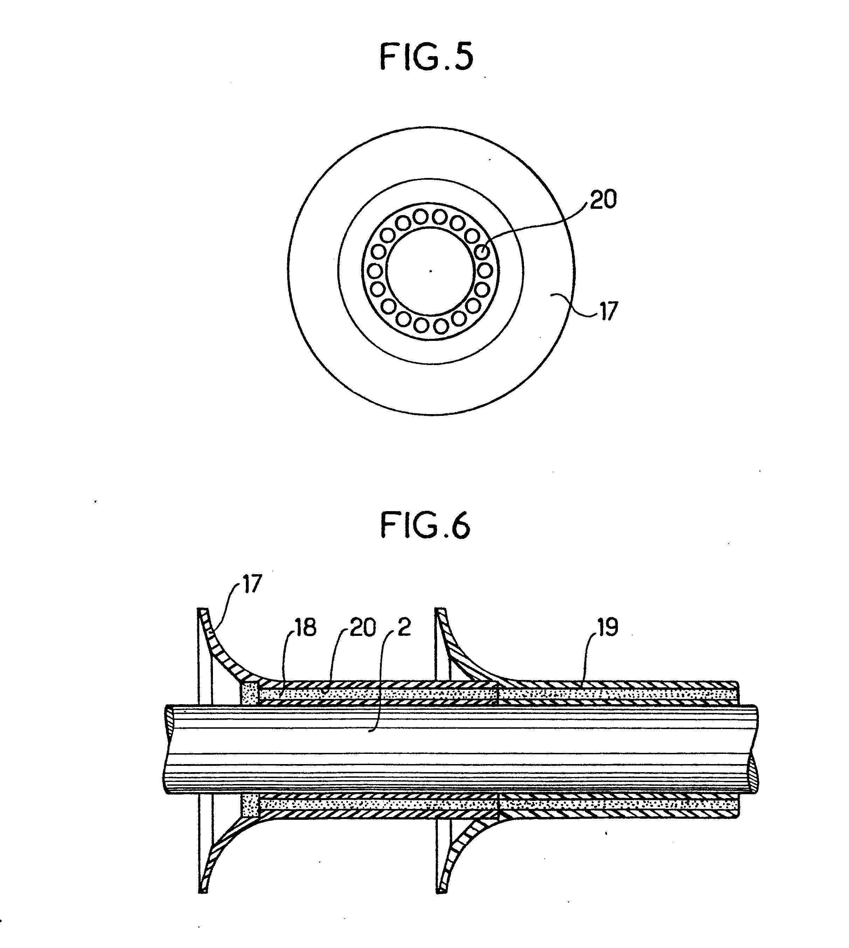

Les figures 5 et 6 représentent une variante de manchon à ailette 19, comportant des canaux 20 au lieu de cannelures, dans lesquels a été introduit de la matière à répartition linéaire de tension 18.

On peut donner aux alvéoles des manchons différentes formes, on peut utiliser des cannelures longitudinales ou des cannelures en forme d'hélice ce qui permet d'enfiler la jupe sur le câble sans la tourner ; les cannelures peuvent avoir également une forme rectangulaire ou triangulaire.

Une variante de montage peut consister à utiliser un tube de plus grand diamètre que le câble, on glisse alors l'ensemble sur le câble jusqu'à la bonne position puis on retire le tube après mise en place sur le câble ; dans ces conditions la matière reste dans le manchon, l'ailette en se retreignant chasse un peu de matière et exclut l'air.

Une extrémité de câble peut comprendre plusieurs ailettes en fonction de la tension et du degré de pollution du site considéré. Les manchons comportent des gorges à une extrémité permettant leur emboîtement sur l'extrémité d'un autre manchon. La présence de cannelures réduit la surface de contact entre le manchon et l'isolant du câble ce qui réduit la surface frottante du câble et réduit également l'effort

- 5 -

de mise en place.

A titre d'exemple, les manchons isolants peuvent être en silicone isolant ou en matière isolante à base d'éthylène-propylène ou autre matière ayant un bon allongement et un comportement électrique satisfaisant. La matière 18 peut être constituée par de la graisse à répartition linéaire de tension, ce qui facilite également le glissement des manchons sur le câble pour leur mise en place.

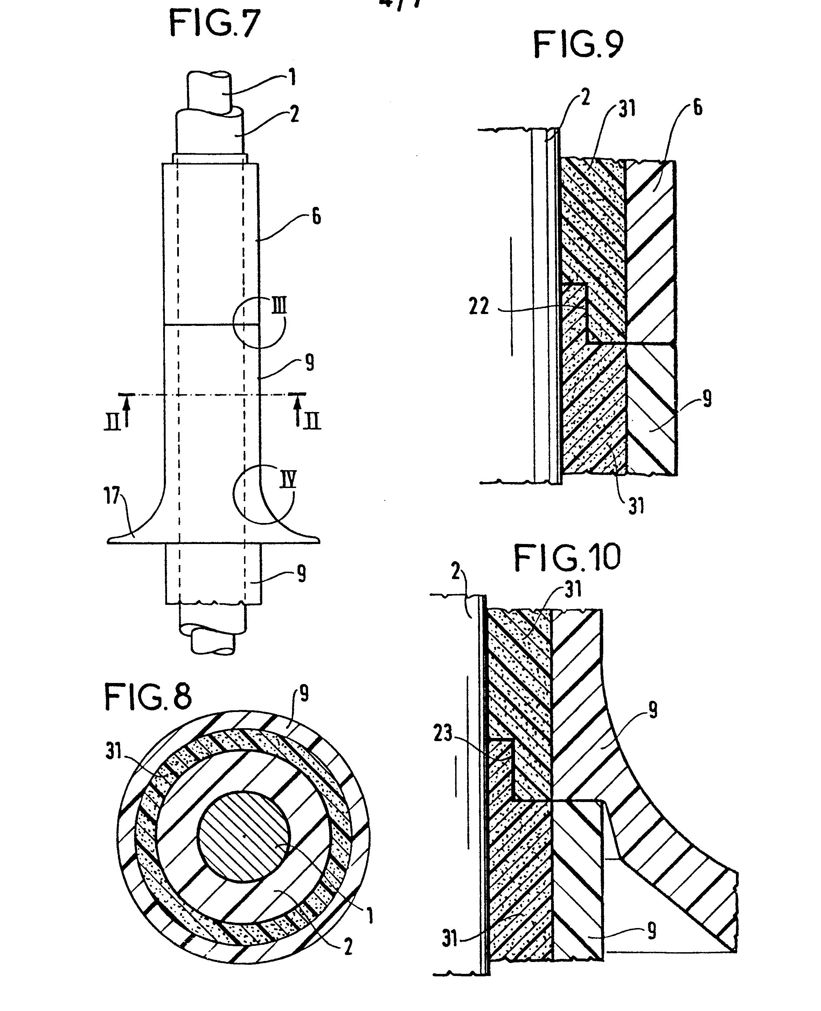

Tel que représenté sur les figures 7 à 10, le câble comporte une âme conductrice 1, une couche semi-conductrice non apparente sur le dessin, un isolant 2, un manchon isolant tubulaire 6 en matière isolante extensible.

Le manchon 6 est suivi d'un manchon 9 à ailette 17 également en matière isolante extensible. A l'intérieur des manchons 6 et 9 se trouve une pièce tubulaire 31 en matière à répartition linéaire de tension par exemple en une matière composée d'un mélange de carborundum et d'élastomère de silicone. Les pièces 6 et 31 ou 9 et 31 sont surmoulées. La pièce 31 comporte des gorges 22 et 23 à ses extrémités pour pouvoir s'emboîter les unes dans les autres ; de même les manchons 6 et 9 sont agencés pour pouvoir s'emboîter élastiquement les uns dans les autres.

La pièce tubulaire 31 et les manchons 6 ou 9 sont rendus solidaires de préférence par surmoulage mais peuvent être fixés l'un à l'autre par collage, soudage ou montés en force.

La mise en oeuvre de l'invention selon les figures 7 à 10 permet d'obtenir les mêmes avantages que dans le cas des figures 1 à 6 et en plus une mise en place plus facile du manchon sur le câble sans risque de perte de matière à répartition linéaire de tension.

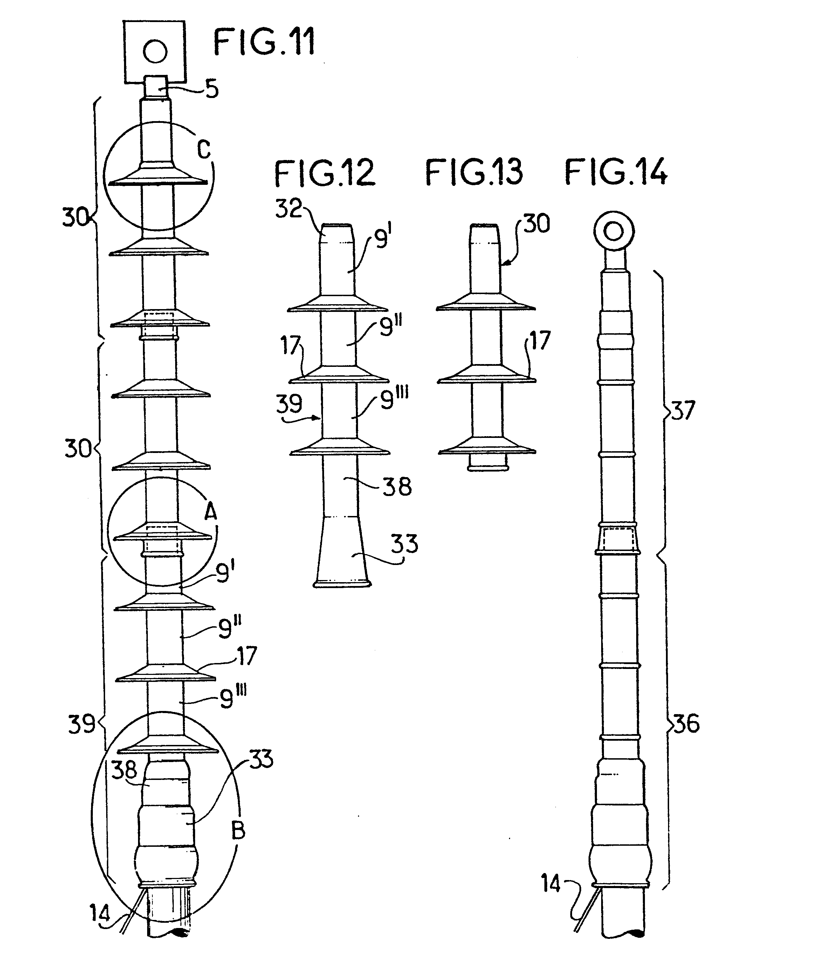

Tel que représenté sur les figures 11 à 15, qui concerne une forme préférée de réalisation de l'invention, des manchons sont enfilés sur une extrémité de câble comportant une âme conductrice 1, une couche semi-conductrice non apparente sur les figures, un isolant 2, un écran métallique collé à la gaine extérieure non apparent sur les figures, une gaine isolante de protection 4, une cosse 5 fixée sur l'extrémité de l'âme 1 du câble, un manchon de protection 30 ne contenant pas de matière à répartition linéaire de tension, avec interposition d'un joint d'étanchéité 21.

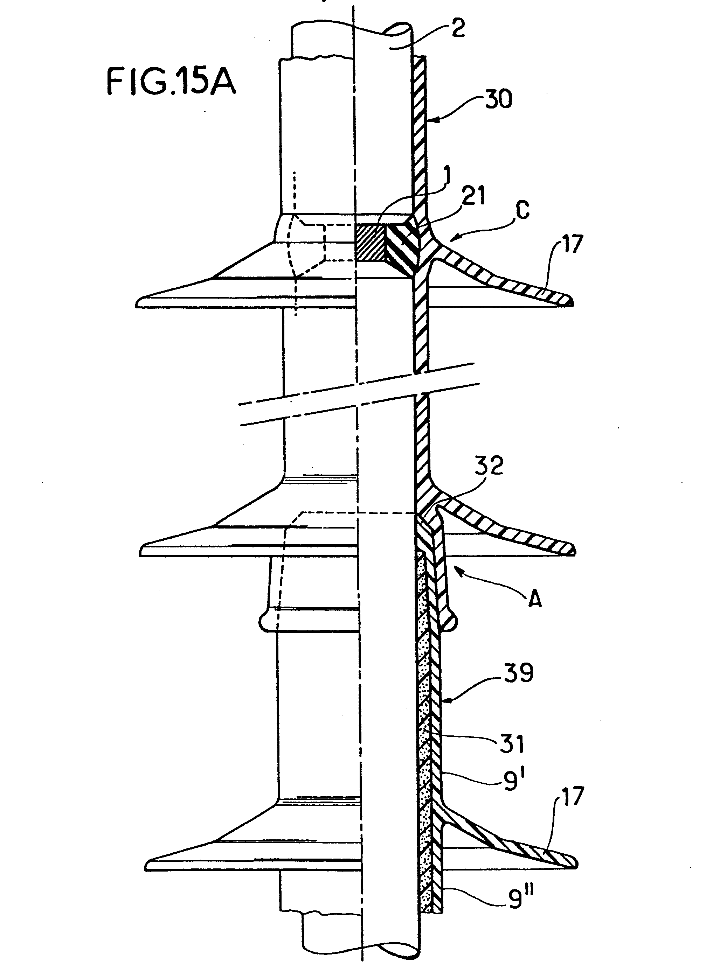

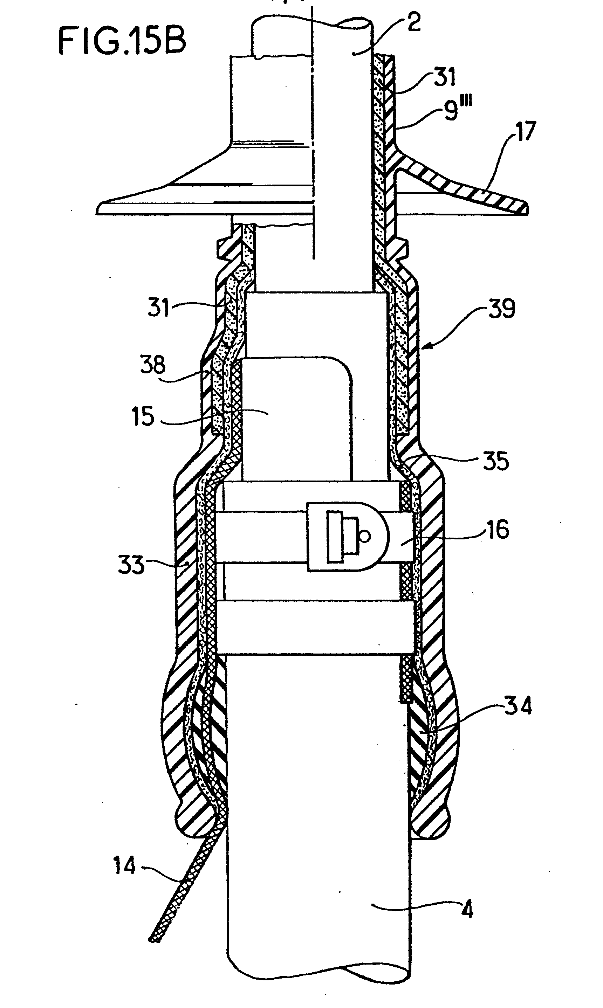

Le manchon 30 est suivi d'un manchon 39 en matière isolante extensible renfermant (figures 15A, 15B) un tube 31 constitué en une matière à répartition linéaire de tension. Le manchon 39 (figure 12) présente trois ailettes 17 et a une longueur équivalente à trois isolateurs selon la figure 1B ou 7. Le manchon 39 comporte une jupe 38 qui vient envelopper le câble au niveau de la sortie d'écran (figure 15B) par une tresse 14 soudée sur une plaque métallique 15 de sortie d'écran. La gaine isolante 4 des câbles est maintenue serrée par des colliers 16 ; un mastic d'étanchéité 34 améliore l'étanchéité à l'extrémité de la jupe 38.

Un ruban semi-conducteur 35 est enroulé à recouvrement depuis l'arrêt d'écran jusqu'au-dessus du mastic d'étanchéité ; il assure la liaison électrique entre l'écran du câble et la matière de répartition linéaire de tension.

L'ailette 17 a une forme évasée à la base en dehors de la partie cylindrique extensible du manchon de manière à ne pas nuire à l'extensibilité de la partie cylindrique.

L'extrémité supérieure 32 du manchon est effilée et son extrémité inférieure 33 est évasée de façon à faciliter l'emmanchement des manchons les uns sur les autres.

Le manchon 39 figure 12 est constitué de quatre parties 9', 9", 9"' et 38 qui sont d'une seule pièce, ces quatre parties forment un seul ensemble moulé en matière isolante souple qui peut être adapté sur des câbles de différentes sections par exemple de 50 à 240 mm$^2$. A l'intérieur du manchon le tube à répartition linéaire de tension 31 est aussi d'une seule pièce, ce qui améliore nettement les performances électriques de la protection. D'autre part l'utilisation d'un manchon d'une seule pièce permet une installation plus rapide du manchon sur le câble sans utiliser un moyen de chauffage.

En se reportant à la figure 12 qui donne une vue extérieure du manchon 39 et aux figures 15A et 15B qui forment en fait une seule figure dont des parties sont coupées pour en réduire la hauteur, on voit que le manchon 39 forme un manchon continu à trois ailettes (la deuxième ailette n'étant pas représentée dans les figures 15A et 15B) et que le tube 31 est continu du haut en bas du manchon.

Sur la figure 11 l'extrémité de câble comporte deux manchons 30 et un manchon 39. La partie A de la figure 15A montre l'emboîtement entre un manchon 39 du type à répartition linéaire de tension et un manchon 30 du type sans répartition linéaire de tension.

La figure 14 montre un type analogue d'extrémité de câble munie de manchons sans ailettes comprenant un manchon 37 du type sans répartition linéaire de tension et un manchon 36 du type à répartition linéaire de tension.

Le manchon 39 et le tube solide en matière à répartition linéaire de tension 31 sont rendus solidaires de préférence par surmoulage mais peuvent être fixés l'un à l'autre par collage, soudage ou montés à force.

Les manchons isolants sont en matière extensible souple de préférence en résine élastique à base de silicone présentant un bon allongement et un comportement électrique satisfaisant.

Le tube 31 est en matière à répartition linéaire de tension à base de carborundum et d'élastomère silicone plus souple que dans le cas de la figure 7 de façon à pouvoir se dilater plus facilement étant donné la plus grande longueur du manchon et la plus grande gamme de sections de câble qu'il peut recouvrir.

La mise en oeuvre de l'invention permet de réaliser des manchons à ailettes adaptables sur des câbles de diamètres différents, de mise en place facile, sans utiliser un moyen de chauffage.

- 8 -

Bien entendu l'invention n'est nullement limitée aux exemples décrits et représentés, elle est susceptible de nombreuses variantes suivant les applications à envisager et les moyens techniques équivalents utilisés.

0007584

REVENDICATIONS

1. Extrémité de câble comportant une âme conductrice, une couche isolante, un blindage extérieur enlevé à une certaine distance à partir de l'extrémité du câble, caractérisée en ce que, pour éliminer les contraintes électriques à l'extrémité du câble, elle comporte un manchon isolant en matière extensible destiné à être enfilé sur le câble et comportant à l'intérieur une matière assurant une répartition linéaire de tension.

2. Extrémité de câble selon la revendication 1, caractérisée par le fait que le manchon isolant en matière extensible comporte à l'intérieur des alvéoles dans lesquels est déposée la matière assurant une répartition linéaire de tension.

3. Extrémité de câble selon la revendication 1, caractérisée par le fait que le manchon est de forme cylindrique.

4. Extrémité de câble selon la revendication 1 ou 2, caractérisée en ce que le manchon comporte une ailette augmentant la distance de contournement.

5. Extrémité de câble selon l'une des revendications 1 à 4, caractérisée en ce que le manchon est en matière souple élastique permettant son adaptation sur un grand nombre de diamètres de gaine de câble.

6. Extrémité de câble selon l'une des revendications précédentes, caractérisée en ce que le profil du manchon est tel que l'ailette est en dehors de la partie cylindrique extensible du manchon de façon à ne pas nuire à son extensibilité.

7. Extrémité de câble selon l'une des revendications précédentes, caractérisée en ce que le manchon comporte des alvéoles en forme de cannelures.

8. Extrémité de câble selon l'une des revendications 1 à 5, caractérisée en ce que le manchon comporte des alvéoles en forme de canaux.

9. Extrémité de câble selon l'une des revendications précédentes, caractérisée en ce que les manchons sont agencés pour s'emboîter élastiquement les uns dans les autres.

10. Extrémité de câble caractérisée en ce que le manchon isolant en matière extensible comporte à l'intérieur une pièce tubulaire en une matière assurant une répartition linéaire de tension.

11. Extrémité de câble suivant la revendication 10, caractérisée en ce que le manchon isolant et la pièce tubulaire en matière à répartition linéaire de tension sont surmoulés.

12. Extrémité de câble suivant la revendication 10, caractérisée en ce que le manchon isolant et la pièce tubulaire sont fixés par collage, soudage ou analogue.

13. Extrémité de câble suivant la revendication 10, caractérisée en ce que le manchon isolant et la pièce tubulaire sont montés en force.

14. Extrémité de câble suivant l'une des revendications précédentes caractérisée en ce que la pièce tubulaire comporte au moins une gorge à son extrémité destinée à assurer son emboîtement dans la pièce correspondante du manchon suivant.

15. Extrémité de câble selon la revendication 10, caractérisée en ce que le manchon isolant correspond à une longueur de plusieurs isolateurs moulés d'une seule pièce.

16. Extrémité de câble selon la revendication 15, caractérisée en ce que le manchon isolant comporte à l'intérieur sur sa plus grande partie une pièce tubulaire d'une seule pièce en une matière assurant une répartition linéaire de tension.

17. Extrémité de câble selon les revendications 15 et 16, caractérisée en ce que le manchon comporte une jupe (38) destinée à envelopper le câble au niveau de la sortie d'écran.

18. Extrémité de câble selon les revendications 15 et 16, caractérisée en ce que le manchon isolant comporte plusieurs ailettes (17).

19. Extrémité de câble selon les revendications 15 et 16, caractérisée en ce que le manchon comporte à sa partie supérieure une partie effilée (32) et à sa partie inférieure une partie évasée (33) de façon à faciliter l'emmanchement du manchon.

FIG.1A    FIG.1B

FIG.2

8

6

FIG.3

10

9

11

17

8

FIG.4

18

2

9

17

FIG.5

FIG.6

# FIG.7

# FIG.8

# FIG.9

# FIG.10

FIG.11

FIG.12    FIG.13    FIG.14

5

C

30

30

A

9'

9"

17

9'''

39

38    33

B

14

32    9'

9"

17

39    9'''

38

33

30

17

37

36

14

FIG.15A

FIG.15B

7/7

Office européen
des brevets

**RAPPORT DE RECHERCHE EUROPEENNE**

Numéro de la demande

EP 79 10 2549

| **DOCUMENTS CONSIDERES COMME PERTINENTS** | | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| | US - A - 3 808 352 (3M) <br> * Colonne 2, lignes 65-67; colonnes 3 et 4 * <br><br> -- <br><br> US - A - 3 210 460 (WESTINGHOUSE EL.) <br><br> * Colonne 2, lignes 32-72; colonnes 3 et 4; colonne 5, lignes 1-44; colonne 9, lignes 71-75; colonne 10, lignes 1-24 * <br><br> -- <br><br> DE - A - 2 223 394 (SIEMENS) <br> * Page 2, alinéa 4; pages 3 et 4 * <br><br> -- <br><br> DE - B - 1 056 223 (SIEMENS) <br> * Colonne 2, lignes 39-54; colonne 3, lignes 1-32 * <br><br> -- <br><br> V.D.I. ZEITSCHRIFT, no.10, vol.116, juillet 1974, Düsseldorf, DE <br> VON OBERING: "Kabel, Leitungen und Kabelgarnituren für Starkstrom", pages 776-778 <br><br> * Page 777, colonne de gauche, alinéas 9 et 10; colonne de droite; page 778, colonne de gauche, alinéas 1 et 2 * <br><br> -- <br><br> US - A - 3 210 461 (WESTINGHOUSE EL.) <br><br> ./ | 1,3-6, 10,11 <br><br><br><br> 1,3, 10,12 <br><br><br><br><br><br><br> 1,3,7 <br><br><br><br><br> 1,3-6 <br><br><br><br><br><br> 1,3,5 <br><br><br><br><br><br><br><br> 10,12 | H 02 G 15/06 <br><br><br><br><br><br><br><br><br><br><br><br> **DOMAINES TECHNIQUES RECHERCHES (Int. Cl. 3)** <br><br> H 02 G 15/06 <br> 15/10 <br> 15/18 <br><br><br><br><br><br><br><br><br> **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 03-10-1979 | LOMMEL |

OEB Form 1503.1 06.78

Office européen
des brevets

**RAPPORT DE RECHERCHE EUROPEENNE**

Numéro de la demande

EP 79 10 2549

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | * Colonne 2, lignes 10-72; colonne 3, lignes 1-40 * | | |
| | -- | | |
| | ELEKTROTECHNISCHE ZEITSCHRIFT A, no. 8, vol. 97, août 1976, Berlin DE "Kabelendverschlüsse bis 30KV" page 518 | 1,19 | |
| | * Page 518, colonne de droite, alinéa 2; figure 2 * | | |
| | ---- | | DOMAINES TECHNIQUES RECHERCHES (Int. Cl. 3) |